# EUROPEAN PATENT SPECIFICATION

(11) **EP 3 801 799 B1**
(45) Date of publication and mention of the grant of the patent: **05.04.2023**
(21) Application number: 19731511.2
(22) Date of filing: 31.05.2019
(51) Int. Cl.: B01D 1/00, B01D 1/22, B01D 3/06, C08F 6/00, F28F 13/08, F28D 7/00, F28D 7/12

(54) **DISTRIBUTOR AND METHOD FOR POLYMER SOLUTION DEVOLATILIZATION**
VERTEILER UND VERFAHREN ZUR POLYMERLÖSUNGSENTGASUNG
DISTRIBUTEUR ET PROCÉDÉ DE DÉVOLATILISATION DE SOLUTION POLYMÈRE

(30) Priority: 31.05.2018 US 201862678607 P
(43) Date of publication of application: 14.04.2021
(73) Proprietor: Dow Global Technologies LLC, Midland, MI 48674 (US)
(72) Inventor: BLANCHARD, Bradley K., Plaquemine, Louisiana 70765 (US); POLLARD, Maria, Lake Jackson, Texas 77566 (US); EWART, Sean W., Lake Jackson, Texas 77566 (US)
(74) Representative: Boult Wade Tennant LLP
(86) International application number: PCT/US2019/034787
(87) International publication number: WO 2019/232289

(56) References cited:
- US-A- 3 014 702
- US-A- 4 423 767
- US-A- 4 564 063
- US-A1- 2005 022 939
- US-B1- 6 627 040
- US-B2- 9 345 985

## Description

### BACKGROUND

This disclosure relates to a distributor for polymer solution devolatilization, to methods of manufacture thereof and to articles that use the distributor.

Polymers and polymeric products (hereinafter referred to as "polymers") are often manufactured in the presence of solvents and other volatile components (e.g., monomers and by-products) (solvents and volatile components will hereinafter be referred to as "volatiles"). After a polymer product is made, it is desirable to remove the residual volatiles from the polymer. The removal of volatiles from the polymer is referred to as "devolatilization".

The separation of the volatiles from a polymer solution is generally accomplished by evaporation where the polymer solution is heated to a temperature higher than the boiling point of the volatiles while simultaneously (concurrent with the heating) or sequentially (after the heating) extracting evolved volatiles from the polymer solution. One method of devolatilization involves transporting the solution of dissolved polymer through a heat exchanger and then into a zone of reduced pressure. Suitable heat exchangers for this purpose, such as, for example, shell-and-tube heat exchangers, comprise a plurality of tubes in a vessel, which are heated via a heating fluid which transfers the heat to the polymer solution and facilitates devolatilization when the pressure is reduced.

In the heat exchanger, it is desirable to retain the polymer solution in a single phase, preferably a liquid phase. The use of single phase facilitates a more efficient heat transfer and also enables a more predictable heat transfer rate into the polymer.

The hot polymer solution is then discharged into a devolatilization vessel where a reduced pressure permits the volatiles to flash thereby causing the polymer to separate from the volatiles. The process to separate the polymer from the volatiles involves the production of foam bubbles. These bubbles generally comprise a polymeric skin in which is trapped the volatiles. Once the bubbles grow to a sufficient size, they coalesce and burst, allowing for the volatile compounds to be released from the polymeric skin. It is desirable for this release of volatiles (from the bubbles) to occur in a separate device such as a distributor as opposed to a heating device An example is disclosed in US6627040.

### SUMMARY

Disclosed herein is a distributor according to claim 1.

Disclosed herein too is a method according to claim 11.

### BRIEF DESCRIPTION OF THE FIGURES

FIG. 1A is one exemplary schematic depiction of an inventive distributor;
FIG. 1B is another exemplary schematic depiction of an exemplary distributor not according to the invention;
FIG. 2 is a schematic depiction of the second conduit surrounded by a plate stack;
FIG. 3 is a depiction of a plate with conduits that continuously expand in a radial direction;
FIG. 4 is a depiction of a conduit section taken along XYY'X' of FIG. 3;
FIG. 5 is a depiction of a plate with conduits that first narrow and then expand in the radial direction;
FIG. 6 is a depiction of a conduit section taken along XYY'X' of FIG. 5;
FIG. 7 is a depiction of a conduit that narrows in the radial direction;
FIG. 8 is a depiction of a plate with the conduits depicted in the FIG. 7; and
FIG. 9 is a depiction of an exemplary devolatilization vessel with the distributor of FIG. 1.

### DETAILED DESCRIPTION

Disclosed herein is a distributor that facilitates the flashing of the volatiles from a polymer solution that is transported through it. The distributor comprises a core (that facilitates heat transfer from a heating oil to the polymer solution) and plurality of stacked plates disposed adjacent to the core. The plates when stacked atop one another, comprise a plurality of conduits for radially transporting the polymer solution from the core to the periphery of the distributor while reducing the polymer solution temperature by means of vaporization and simultaneously reducing its pressure.

The conduits in the stacked plates facilitate polymer solution distribution and also provide a mass transfer area to the polymeric solution to produce polymeric foam bubbles so that diffusion of the volatile compounds takes place efficiently from the polymer into the bubbles. Once the bubbles grow to a sufficient size, they coalesce and burst, allowing for the volatile compounds to be released from the polymer. The polymer and the volatile compounds thus separate into two phases - a vapor phase that contains volatiles and a liquid (or melt) phase that contains polymer.

In an embodiment, the distributor is located atop a devolatilization vessel that contains a first port for removing the volatiles and a second port that facilitates the removal of the polymer. The second port is in fluid communication with a positive displacement pump, such as, for example, a gear pump. The positive displacement pump assists in the removal of the polymer from the devolatilization vessel. The devolatilization vessel will be discussed later.

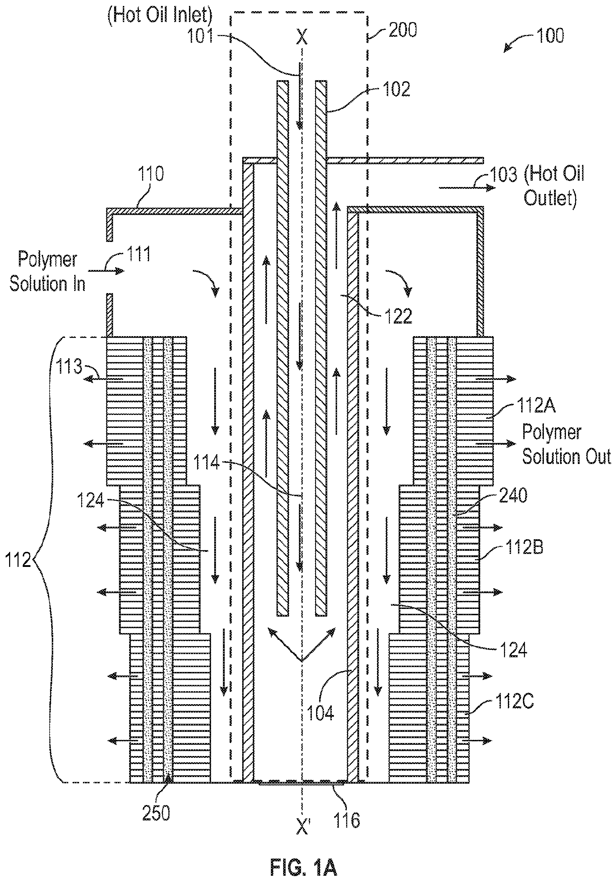

With reference now to the FIG. 1A, the distributor 100 comprises a plurality of plate stacks 112 arranged concentrically about axis XX' in order of decreasing outside diameters from top to bottom. The plate stacks 112A, 112B, 112C, and so on, are concentrically arranged with respect to two conduits - a first conduit 102 and a second conduit 104. The first conduit 102 and the second conduit 104 are also arranged to be concentric about the axis XX' and form the core 200 (shown in the dotted box). Surrounding the core 200 is the plurality of plate stacks 112. The plate stacks are separated from the core by an annular space 124 (called the second annular space) through which flows the polymer solution. The polymer solution flows through a plurality of conduits in the plates of the plate stack where the volatiles begin to flash off from the polymer solution.

The first conduit 102 has a smaller inner diameter and outer diameter than the inner diameter and the outer diameter of the second conduit 104. The outer diameter of the first conduit 102 is smaller than the inner diameter of the second conduit 104. Disposed between the inner diameter of the second conduit 104 and the outer diameter of the first conduit 102 is a first annular space 122 that provides a passage for hot oil to be transmitted through the distributor 100. The hot oil facilitates heating of the polymer during startups or shutdowns of the plant or if it is desirable to keep the polymer solution molten. Each of the conduits 102 and 104 is provided with a flange (not shown) that supports external piping (not shown) that transports hot oil to the distributor.

The second conduit 104 contains a passage 103 (also termed the exit port 103) through which the hot oil exits the distributor. The hot oil thus enters the distributor through the inlet port 101 and is transported into space 114 located in the first conduit 102. It then travels through the first annular space 122 between the first conduit 102 and the second conduit 104 (as depicted by the arrows) and exits the distributor via the exit port 103. During its travel through the space 114 as well as the annular space 122 between the first and second conduit, the hot oil heats up the polymer solution that is simultaneously transported through the distributor. The second conduit 104 serves the dual purpose of mechanically securing the plurality of plate stacks and also heating the polymer if needed so as to keep it in the liquid (or molten) phase.

The plurality of plate stacks 112A, 112B and 112C (hereinafter referred to as the "plurality of plate stacks 112") are concentrically arranged with regard to the first conduit 102 and the second conduit 104. The plurality of plate stacks 112 surround the second conduit 104 and are located in position between the mounting plate 110 and the plate 116 located at the bottom of the distributor. The second conduit 104 facilitates retaining the plurality of plate stacks 112 in position during the operation of the distributor. While the FIG. 1A depicts three plate stacks 112A, 112B and 112C, the distributor can have 2 or more plate stacks, 5 or more plate stacks, 10 or more plate stacks, and so on. It is generally desirable to have 2 to 15 plate stacks. Each stack comprises a plurality of plates that contain a plurality of channels that extend radially from the second annular space 124 to the outer periphery of the plate stack.

The polymer solution enters the distributor through port 111 and travels through the second annular space 124 between the plurality of plate stacks 112 and the second conduit 104. The polymer solution then travels radially outwards from the second annular space 124 through the conduits in the plates to the outside of the distributor as shown by arrows 113.

Each successive stack from the plurality of plate stacks 112 is arranged to have a smaller inner diameter and a smaller outer diameter than the stack atop it. Successive stacks from top to the bottom of the distributer have decreasing inner and outer diameters. In other words, each stack of plates has a smaller inner diameter and a smaller outer diameter than the stack immediately above it. As can be seen in the FIG. 1A, the stack 112A has a larger inner diameter and a larger outer diameter than the stack 112B that lies immediately below it. Similarly, the stack 112B has a larger inner diameter and a larger outer diameter than the stack 112C that lies immediately below it. This arrangement of successive plate stacks results in a decreasing annular space 124 from top to bottom in the distributor.

In the inventive embodiment, the radial dimensions of successive plate stacks are varied in step function fashion as seen in the FIG. 1A. In the embodiment, the radial dimensions of successive plates can be smoothly varied from top to bottom of the plate stack. In other words, there is one plate stack 112 where the inner and outer diameter of each successive plate in the plate stack is smaller than the inner and outer diameter of the preceding plate in the stack. This variation in inner and/or outer diameters may be linear or curvilinear. This arrangement of decreasing diameters (whether in step function or smooth fashion) from top to bottom facilitates minimizing the interference of the foam that exits the uppermost conduits with the foam that exits the conduits located lower down in the distributor.

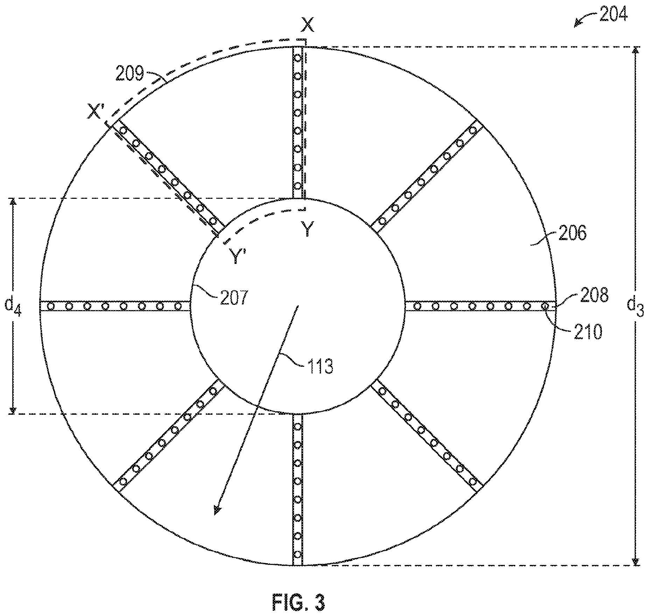

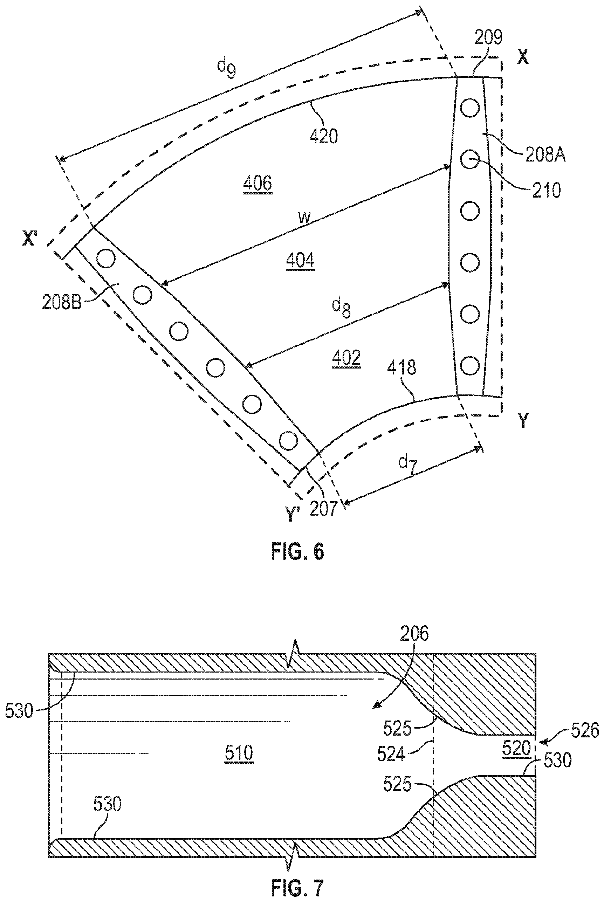

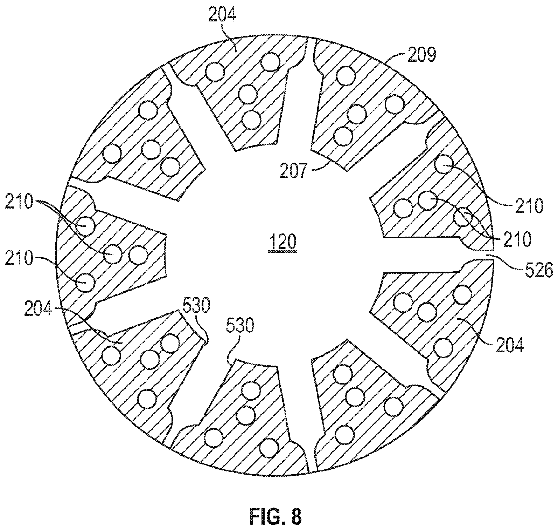

As noted above, in order to ensure that polymer flows through all the plates and the conduits contained therein (from the uppermost region to the bottom of the distributor), the conduit design is adjusted to accommodate the pressure drop as the polymer solution flows through them. For example, the liquid head of the polymer solution exerts more pressure on the lower conduits than on the upper conduits in the plate stack. In addition, in the design shown in FIG. 1A, the pathway the polymer solution needs to flow through to exit the distributor is smaller in the lower plate stacks than the upper plate stacks. In one embodiment, in order to ensure an equivalent pressure drop through the plurality of stacks the uppermost conduits (the conduits in the plate stacks located near the top of the distributor) are provided with a divergent design (see FIGs. 3, 4, 5 and 6) while the lower conduits (the conduits located in the plate stacks near the bottom of the distributor) are provided with a convergent design (see FIGs. 7 and 8). In another embodiment, in order to equalize pressure across the conduits from top to bottom of the distributor, the conduits at the bottom of the stack of plates have a smaller cross-sectional area where the polymer solution exits the conduits while those at the top have a larger cross-sectional area than the conduits at the bottom of the plate stack.

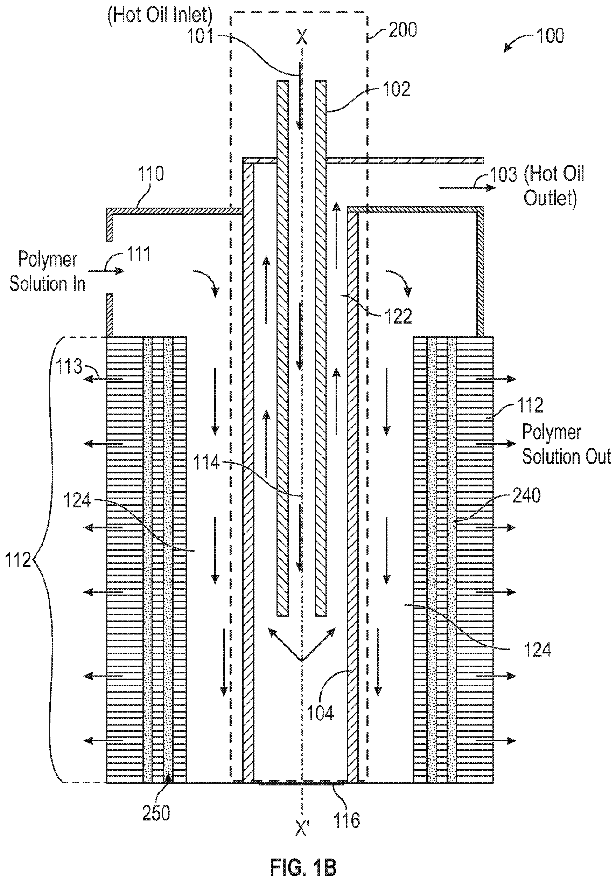

In a non-inventive embodiment, as shown in FIG. 1B, the plurality of plate stacks 112 comprise plates that have similar inner and outer diameters. This arrangement results in the formation of a second annular space 124 having a constant cross-sectional areas from top to bottom of the distributor. In this embodiment, the plate stacks 112 are essentially one stack of similarly sized plates.

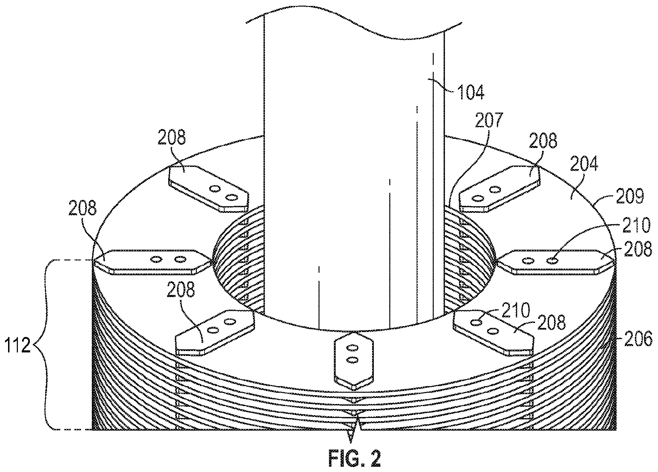

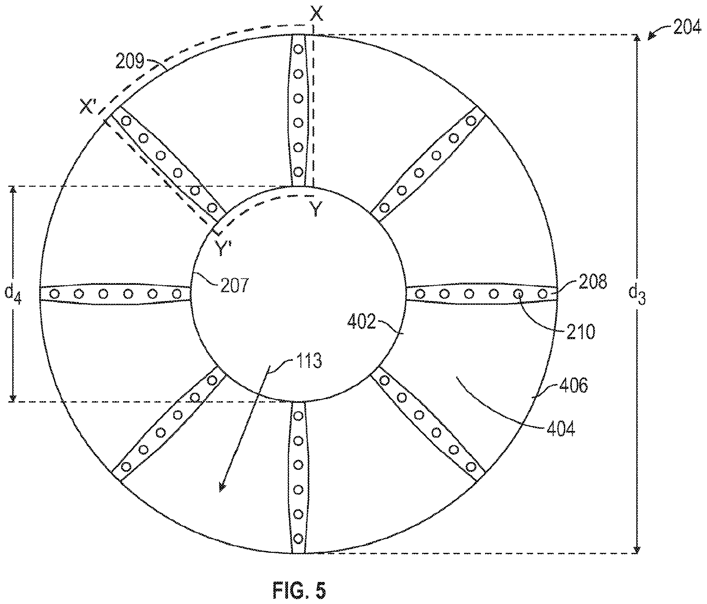

FIG. 2 depicts one embodiment of a partial plate stack 112 disposed around the second conduit 104. In an embodiment, each plate 204 of the plate stack 112 has a plurality of channels 206 (See FIGs. 3 and 5.) that extend radially outwards from an inner circumference 207 to an outer circumference 209 of the plate and transport the polymer solution from the core of the distributor to its outer periphery (See arrows 113 in the FIG. 1A.). It is to be noted that each plate 204 may have a channel 206 formed in its floor (e.g., machined in the floor), or alternatively may have the channel 206 formed when combined with a wall 208. The combination of the plate with the wall is also called a "layer". Put another way, the wall 208 may be an integral part of the plate 204 or may be a separate unit that contacts the plate 204 to create the channel 206. When the distributor 100 is assembled, the channel between the floor of the plate and the walls is also bounded by the bottom of an upper neighboring plate (which acts as a roof) to form a "conduit" that conducts the polymer solution from the core to the outer periphery of the plate stack. Thus each channel facilitates the formation of a conduit when two plates contact each other.

Each plate 204 in the plate stack 112 is ring-shaped having an opening in the center (which defines the inner circumference 207) and is bounded by the outer circumference 209. Examples of suitable metals for use in the plate 204 are aluminum, carbon steel, stainless steel or other metal alloys.

The radial distance or length between the inner circumference and the outer circumference of the plates 204 may range from 2 to 60 centimeters, preferably 10 to 50 centimeters, and more preferably 15 to 40 centimeters. Disposed in the plate 204 between each successive pair of channels 206 is a wall 208 that contains holes 210 to house banks of tubes 240 through which a heat transfer fluid 250 is transported. In another embodiment, the holes 210 may house banks of rods that are present to keep the plurality of plate stacks together and in proper alignment with respect to each other. In another embodiment, some holes 210 may house banks of rods for providing mechanical support and alignment, while other may house banks of tubes through which heat transfer fluid is transported. Each plate may have 2 to 60 channels, preferably 4 to 40 channels, and more preferably 6 to 20 channels. The tubes and/or the rods in the tube bank provide some support to the plates in the plate stack and facilitate holding them in position during the operation of the distributor. Each wall 208 contains 2 to 20 tubes, preferably 4 to 10 tubes. In an embodiment, the tubes in the tube bank are metal tubes and may comprise carbon steel. In a preferred embodiment, the holes 206 house banks of carbon steel rods that provide structural support to and facilitate alignment of the stack of plates.

The wall 208 has a thickness "t" of 0.2 to 3 centimeters, preferably 1 to 2 centimeters. Each tube 240 in the tube bundle has an inner diameter of 1 to 3 centimeters and an outer diameter of 1.5 to 4.0 centimeters. A preferred inner diameter for the tube is 1.5 to 2 centimeters and a preferred outer diameter is 1.7 to 2.5 centimeters.

The average distance between the bottom of a plate (which forms the roof of the conduit) and the floor of the neighboring plate in the plate stack is 0.2 to 1.0 centimeters, preferably 0.3 to 0.6 centimeters. The distance between the bottom of a plate and the floor of the neighboring plate determines the height of the conduit. It is desirable to minimize the number of walls and to increase channel surface area thus providing the polymer solution with the maximum available surface area for flashing off the volatiles.

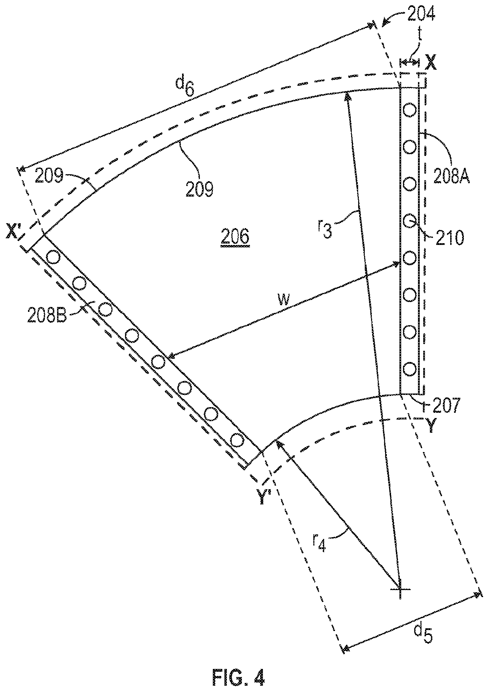

The height of each conduit is substantially uniform throughout its length-as desired for ease of manufacture and assembly of stacks of the heating plates (as shown in FIGS. 3 and 4). The height is selected along with the other dimensions of the conduit and elements adjacent to the conduit to optimize the pressure drop and mass transfer area for devolatilization. In an embodiment, the height of the conduits in the upper portion of the plate stack is greater than the height of the conduits in the lower portion of the stack. The height of the conduits in the upper portion of the plate stack is 0.6 to 1.4 centimeters, preferably 0.8 to 1.2 centimeters, while the height of the conduits in the lower portion of the plate stack is 0.3 to 0.7 centimeters. In an embodiment, the height of the conduits or alternatively, the cross-sectional area of the conduits may be varied across the entire distributor to ensure even distribution of the polymer solution through the distributor.

As noted above, it may be desirable to use plates with divergent channels (in the radial direction) in the upper plate stacks and to use plates with convergent channels in the lower plate stacks. Possible channel designs for the upper plate stacks are shown in the FIGs. 3 and 5. FIG. 3 reflects a top view of one plate 204 of the plate stack 112, while the FIG. 4 reflects a sectional view along section XYY'X'.

As seen in the FIGs. 3 and 4, each plate contains a plurality of channels 206 that increase in width for at least a portion of the radius that extends from the inner circumference 207 to the outer circumference 209 of the plate 204.

FIG. 4 is an expanded schematic top view of the section XYY'X' shown in the FIG. 3 and represents one possible design of the channel 206. In an embodiment, each plate contains a plurality of channels 206 that increase in width from the inner circumference 207 to the outer circumference 209 of the plate 204.

As seen in the FIG. 4, the channel 206 has a gradually increasing width in the radial direction and is bounded by a pair of walls 208A and 208B and extends from the inner circumference 207 to the outer circumference 209 of the plate 204. In this embodiment, the channel 206 never decreases in width from the inner circumference 207 to the outer circumference 209.

In the embodiment depicted in the FIG. 4, the walls 208A and 208B extend radially outwards linearly from the inner circumference 207 to the outer circumference 209 of the plate 204. The walls 208A and 208B are closer to each other at the inner circumference 207 and are farther apart at the outer circumference 209. This channel 206 therefore has a gradually expanding width "w" from the inner circumference 207 to the outer circumference 109 of the plate. As noted above, the walls 208A and 208B may be integral with the plate 204 (i.e., the wall 108 and the plate 104 are a monolithic piece) or may alternatively be a separate stand-alone piece that is assembled with the flat plate 204 to form the channel 206.

The channel width at the inner circumference "ds" is less than the channel width "d₆" at the outer circumference. The ratio of d₆ to ds is 1.1: 1 to 6:1, preferably 1.3:1 to 3:1. In an embodiment, the distance d₆ is 5 to 40 centimeters, preferably 10 to 20 centimeters, while the distance ds is 2 to 25 centimeters, preferably 5 to 20 centimeters. The channel 206 has a floor that has a depth of 0.1 to 0.8 centimeters, preferably 0.2 to 0.4 centimeters from the top of the walls 208.

In one embodiment, the polymer solution therefore contacts an ever widening channel as it travels from the annular space 124 (See FIGs. 1A or 1B.) to the outer circumference 209. This design is advantageous in that it allows for a minimized pressure drop in the fluid as it travels through the conduit and a large mass transfer area to allow for optimal separation of the liquid and vapor phases.

The walls 208 are situated between the channels 206 and separate successive channels on a particular plate from one another. The walls 208 and the channels 206 are evenly distributed across the surface of the plate 204. (See FIGs. 3 and 5.) As noted above, each wall 208 contains a plurality of holes 210 that houses tubes 240 through which the heating fluid 250 flows (See FIG. 1.).

The FIGs. 5 and 6 depict another exemplary wall 208 design that causes the width "w" of the channel 206 to decrease over a portion of the plate radius and then to increase over a portion of the plate radius. In this embodiment, the wall 208 can be integral with the plate 204 (e.g., a monolithic unit) or separate from the plate 204. With reference now to the FIGs. 1, 5 and 6, each plate contains a plurality of channels 206 that decrease in width for at least a portion of the radius that extends from the inner circumference 207 to the outer circumference 209 of the plate 204. After decreasing for a portion of the plate radius, the width then increases as the channel progresses to the outer circumference 209.

With reference now again to the FIGs. 5 and 6, there is depicted the shape of the channel that comprises three zones, a first generally converging zone 402 which is wider at its entrance than its exit, a second, restrictive zone 404 wherein the channel achieves a minimum width sufficient to cause a pressure drop across the restrictive zone, thereby preventing substantial flashing of the volatile components while in the first zone; and a third generally diverging zone 406 designed to allow for a slight decrease in pressure in the polymer solution, allowing the polymer solution to foam/become two-phase. The distance between the inner circumference 207 and outer circumference 209 for the plate 204 (which represents the length of the channel 206) of the FIG. 6 is detailed above and is the same as detailed for the FIGs. 3 and 4.

With reference now to the FIG. 6, the distance d₉ is greater than d₇, which is in turn greater than ds. The first zone 402 has an opening 418 into which the polymer solution enters the channel 206. The length of the first zone is from 5 to 20% of the total length of the channel and the width at the inner circumference 207 is from 1 to 50 centimeters (cm). The ratio of the width of the widest point of the first zone to the width of the narrowest point of the zone varies from 1.0: 1 to 10:1.

The second zone 404 begins at the terminus of the first zone and varies in length from about 1.0% to 40% of the total length of the channel connecting with the entrance of the third zone. The width of the second zone may remain constant for its entire length, decrease to a minimum and then remain constant or decrease to a minimum and thereafter increase again. Preferably at its narrowest point the second zone is 0.8 and 40.0 cm wide, more preferably 0.8 and 15 cm wide. The ratio of the width of the widest point of the zone to the width of the narrowest point of the zone is preferably from 1.0:1 to 2.0:1. Also preferably, the ratio of the widest width of the first zone to the narrowest width of the second zone is greater than 2:1.

The third zone 406 begins at the terminus of the second zone and terminates with an exit 420 for discharge of the polymer solution. The length of the third zone is from about 40 to 85% of the total length of the channel. The ratio of the width of the third zone at its terminus to that at its entrance is preferably from 1.5:1 to 10:1. The width of the zone need not be constantly increasing from entrance to terminus but may follow a sinusoidal or other curved shape. Also preferably, the ratio of the maximum width of the third zone to the minimum width of the restrictive zone is greater than 2:1.

While the plates in the plurality of plate stacks 112 in the upper and middle portions of the distributor 100 may have the divergent channel designs shown in the FIGs. 3 and 5 respectively, the plate stacks in the lower portions of the distributor 100 may contain channels with a convergent design in the radial direction as shown in the FIGs. 7 and 8.

FIG. 7 depicts the shape of a single converging channel 206 in a plate 204. As detailed above, the channel 206 is the space defined by the walls 208 of the adjacent channels. The ceiling of the channel 206 is provided by an adjacent plate in the plate stack. The channel itself comprises two zones, a first zone 510 which has a relatively large cross-sectional area from its inlet 514 to its outlet 524, and a second zone 520 which has a substantially smaller cross-sectional area in at least one location between the first zone's outlet 516, which is also the inlet 524 to the second zone, and the second zone's outlet 526. The cross-sectional area of the restricted portion (or all) of the second zone 520 is sized to cause substantial flashing, preferably substantially complete flashing, of the volatile components from the flowable material either within the second zone 520 itself, or more preferably immediately downstream thereof upon exiting from the outlet 526 of the second zone 520.

The second zone 520 begins at the outlet 516 of the first zone 510 and terminates in an outlet 526 that is adapted to discharge the flowable material into a collection-and-separation vessel. The second zone 520 varies in length, which is typically from 0.2 percent to 40 percent, preferably from about 0.5 to about 10 percent, and more preferably from about 1 to about 5 percent, of the total length of the channel 206. The cross-sectional area of the second zone 520 is smaller than the cross-sectional area of the first zone 510, both to impose a sufficient back pressure on the flowable material within the first zone 510, and to result in a rapid and dramatic flashing of the volatile components out of the flowable material either within the second zone 520, or preferably immediately downstream of the outlet 526 of the second zone 520.

As shown in FIG. 7, the cross-sectional area and shape of the second zone 520 may be substantially uniform between its inlet 524 and its outlet 526, except for a short transition section 525 at the inlet 524. Alternatively, the shape and cross-sectional area of the second zone may be converging or diverging or some combination thereof to induce the necessary pressure drop and flash the volatile components within the second zone 520, or preferably at the outlet 526.

FIG. 8 depicts a top view of a plate with the convergent channels of the FIG. 7. The plate 204 has a plurality of channels 206 extending radially from the core. The channels receive the polymer solution from the annular passage 120. Plate 204 has a plurality of holes 210 disposed within the plate 204 and spaced around and between channels 206, and adapted to transfer heat from the holes 210 through the walls 208 of the plate 204 and into the channels 206 or to hold the stack of plates together. The holes 210 may be any type of heating element, such as electrical heating elements or thermal-fluid heating elements or they can be metal rods that provide structural support to the plate stack and secure the plates in position. Preferably, holes 210 comprise a multiplicity of heat exchange tubes through which a thermal-fluid (such as steam, hot oil, a synthetic liquid, or other heated liquid) flows. In an exemplary embodiment, tubes 240 that carry heating oil may traverse the holes 210 to heat or cool the polymer solution as desired.

As noted above, the plate stack 112 comprises successive plate stacks each of which have a decreasing outer diameter and inner diameter. Each stack of plates is staggered with regard to the plate stack next to it. The plate stack with the smallest outer and inner diameters is located at the bottom of the entire stack, while the plate with the largest outer and inner diameters is located at the top of the entire stack. Disposed between the plate stack at the bottom of the stack of plates and the plate stack at the top are a series of intermediate stacks whose inner and outer diameters increase systematically from bottom to top. In other words, each successive plate stack from bottom to top has an inner and outer diameter that is smaller than the plate stack immediately above it.

The ratio of the outer diameter of a first plate stack (e.g., 112A) to the outer diameter of a second plate stack (e.g. 112B) adjacent to the first plate stack is 1:0.95 to 1:0.75, preferably 1 :0.9 to 1:0.8. (See FIG. 1A.) The ratio of the outer diameter of the first plate stack (e.g., 112A) to the outer diameter of the last plate stack (e.g. 112B) adjacent to the first plate stack is 1:0.9 to 1:0.3, preferably 1:0.8 to 1:0.4. The ratio of the inner diameter of a first plate stack (e.g., 112A) to the inner diameter of a second plate stack (e.g. 112B) adjacent to the first plate stack is 1 :0.95 to 1 :0.75, preferably 1:0.9 to 1 :0.8. The ratio of the inner diameter of the first plate stack (e.g., 112A) to the inner diameter of the last plate stack (e.g. 112B) adjacent to the first plate stack is 1:0.5 to 1:0.3, preferably 1:0.45 to 1:0.35. This plate design minimizes interference of the foam that exits the uppermost slots with those further down.

The total number of plates in a stack can be 10 to 100, preferably 20 to 60. The total number of plate stacks in a distributor is 2 to 30, preferably 3 to 20, and more preferably 4 to 10.

With reference now once again to the FIGs. 1A and 1B, it may be seen that the tubes 240 of the tube bank travel through all of the plate stacks of the distributor. Some of the tubes 240 may be replaced with pipes or rods that serve as locating or stabilizing elements that provide stability and reinforcement to the plates in the plate stacks.

As noted above, the plurality of plate stacks 112 is secured between a nut 116 located at the bottom of the distributor and a first upper mounting plate 110. The first upper mounting plate 110 is designed to bolt directly to the upper flange on a devolatilization vessel. The plurality of plate stacks 112 is thus held in position by the second conduit 104, the tubes 240 in the tube bank, any locating elements used in lieu of the tubes 240 in the tube bank, the nut 116 at the bottom of the distributor and the first upper mounting plate 110.

With reference now to the FIG. 1A, in one manner of operating the distributor, the polymer solution entering the inlet port 111 enters the chamber 120 and travels downwards in the annular space 124 between the second conduit 104 and the plurality of plate stacks 112. The polymer solution 111 enters the distributor at a temperature T₁ and pressure P₁ at inlet port 120 and initially travels vertically downwards along the annular space 124. The nut 116 keeps the plate assembly in place, and it prevents the further downward travel of the polymer solution and causes the polymer solution to travel radially outwards through the conduits in the plurality of plate stacks 112 as indicated by the arrow 113. The temperature at the periphery of the distributor is denoted by T₂ and the pressure is P₂. During the travel of the polymer solution through the conduits in the plate stacks, hot oil 250 may be transported through the tubes 240 in the plates to heat or cool the polymer solution. In an embodiment, the oil in the tubes 240 is used to cool the polymer solution as is travels through the conduit. During start-up of the distributor 100, hot oil may also optionally be transported through the hot oil inlet 101 into the first conduit 102 and through the first annular space 122 (that lies between the first conduit 102 and the second conduit 104). The hot oil exits the distributor at the hot oil exit 103. The hot oil may be used in the first annular space 122 to heat the polymer to a molten state during start-up of the distributor (e.g., after a shut-down) or under low-flow conditions. In an embodiment, the tubes are replaced with rods.

During the travel of the polymer solution through the conduits in the plate stacks, the solvent begins to flash off from the polymer solution leading to separation of the solvent from the polymer. Almost all or a partial amount of the solvent flashes off in the conduit. It is desirable for the flashing to begin in the conduit, but a large portion of the flashing may occur in the devolatilization vessel outside of the conduit. i.e., outside of the distributor.

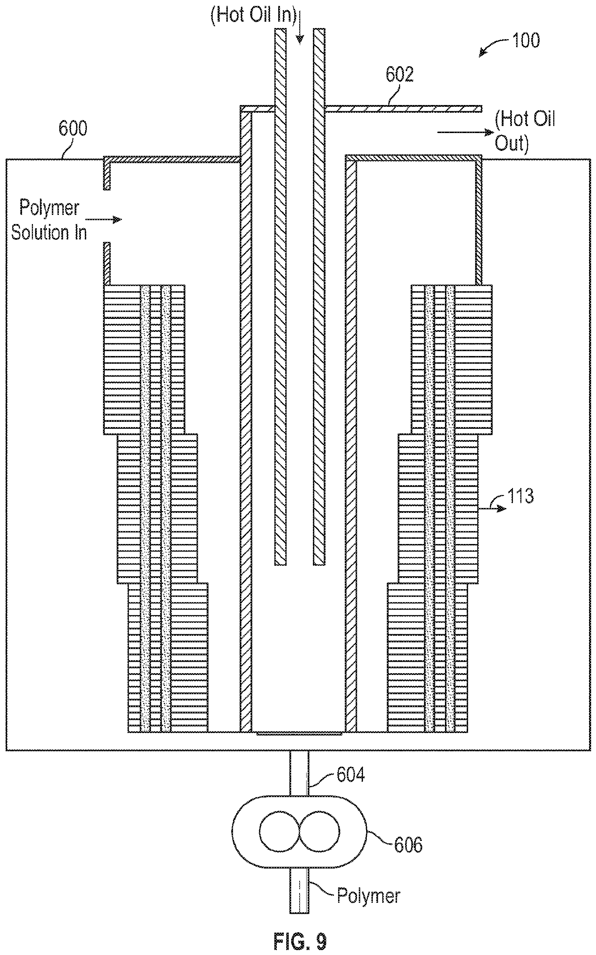

As noted above, the distributor may be mounted atop a devolatilization vessel. FIG. 9 depicts an exemplary arrangement where the distributor 100 is mounted atop a devolatilization vessel 600. The devolatilization vessel 600 comprises a first port 602 for removal of solvent that is flashed off from the polymer solution. The first port 602 generally lies in the upper portion of the devolatilization vessel 600. It also contains a second port 604 located at the bottom of the devolatilization vessel 600 for removing polymer that is separated from the polymer solution. The second port 604 is in fluid communication with a positive displacement pump 606 that facilitates removal of the polymer from the bottom of the devolatilization vessel.

With reference now to the FIGs. 1A, 1B, and 9, in operating the devolatilization vessel 600, the polymer solution is charged to distributor 100 via inlet port 111. Hot oil 250 can be simultaneously charged to the distributor 100 via tubes 240. The polymer solution travels through the annular space 124 through the conduits in the plurality of plate stacks 112 and upon emanating from the conduits (as depicted via arrow 113) separates into solvent that is extracted from the devolatilization vessel 600 (not shown) and polymer that is extracted via port 604 using the positive displacement pump 606.

### Operating Conditions

In an exemplary embodiment, the inlet temperature T₁ is 220 to 300°C and inlet pressure P₁ is 70 to 140 kgf/cm², while the outlet temperature T₂ is 200 to 260°C and the outlet pressure P₂ is 0.003 to 0.05 kgf/cm².

The polymer solution generally contains 30 to 95 weight percent (wt%), preferably 45 to 85 wt% of a polymer, based on the total weight of the polymer solution. The solution has a viscosity of 10,000 to 2,000,000 centipoise, preferably 50,000 to 1,000,000 centipoise, and preferably 100,000 to 800,000 centipoise. The average solution viscosity may be 100,000 to 600,000 centipoise measured as detailed below. The polymer solution is transported through the distributor at a flow rate of 45,000 to 225,000 kilograms per hour, preferably 135,000 to 180,000 kilograms per hour, and preferably 147,000 to 170,000 kilograms per hour. The flow is 0.5 to 30 kilograms/hr/conduit, preferably 3to 10 kilograms/hr/conduit.

The heating fluid 250, if it is used, has a maximum inlet temperature of 285 to 295°C and a minimum outlet temperature of 200 to 220°C. The heating fluid generally decreases by a temperature of 5 to 10°C during the heating of the polymer solution. The maximum inlet temperature for the heating fluid is always greater than the minimum outlet temperature.

The polymer that is mixed with the solvent may be a thermoplastic polymer, a lightly crosslinked polymer, or a blend of a thermoplastic polymer with a lightly crosslinked polymer. The polymer can be an oligomer, a homopolymer, a copolymer, a block copolymer, an alternating copolymer, a random copolymer, a graft copolymer, a star block copolymer, a dendrimer, or the like, or a combination thereof.

Examples of the polymers that can be mixed with the solvent include a polyolefin, a polyacetal, a polyacrylic, a polycarbonate, a polystyrene, a polyester, a polyamide, a polyamideimide, a polyarylate, a polyarylsulfone, a polyethersulfone, a polyphenylene sulfide, a polyvinyl chloride, a polysulfone, a polyimide, a polyetherimide, a polytetrafluoroethylene, a polyetherketone, a polyether etherketone, a polyether ketone, a polybenzoxazole, a polyoxadiazole, a polybenzothiazinophenothiazine, a polybenzothiazole, a polypyrazinoquinoxaline, a polypyromellitimide, a polyquinoxaline, a polybenzimidazole, a polyoxindole, a polyoxoisoindoline, a polydioxoisoindoline, a polytriazine, a polypyridazine, a polypiperazine, a polypyridine, a polypiperidine, a polytriazole, a polypyrazole, a polypyrrolidine, a polycarborane, a polyoxabicyclononane, a polydibenzofuran, a polyphthalide, a polyanhydride, a polyvinyl ether, a polyvinyl thioether, a polyvinyl alcohol, a polyvinyl ketone, a polyvinyl halide, a polyvinyl nitrile, a polyvinyl ester, a polysulfonate, a polynorbornene, a polysulfide, a polythioester, a polysulfonamide, a polyurea, a polyphosphazene, a polysilazane, a polyurethane, a polysiloxane, or the like, or a combination thereof.

Exemplary polymers are polyolefins. Examples of polyolefins include homopolymers and copolymers (including graft copolymers) of one or more C₂ to C₁₀ olefins, including polypropylene and other propylene-based polymers, polyethylenes and other ethylene-based polymers, and olefin block copolymers. Such olefin-based polymers include high density polyethylenes (HDPE), low density polyethylenes (LDPE), linear low density polyethylenes (such as the LLDPE marketed by The Dow Chemical Company under the trademark "DOWLEX"), enhanced polyethylenes (such as those marketed by The Dow Chemical Company under the trademark "ELITE"), polymers made via molecular or singlesite catalysts, such as metallocene, constrained geometry, polyvalent aryloxy ether, etc. Examples of such polymers are linear or substantially linear ethylene copolymers (such as those marketed by The Dow Chemical Company under the trademarks "AFFINITY" and "ENGAGE" and those marketed by ExxonMobil Chemical Company under the trademarks "EXACT" and "EXCEED"), propylene-based copolymers (such as those marketed by The Dow Chemical Company under the trademark "VERSIFY" and those marketed by ExxonMobil Chemical Company under the trademark "VISTAMAXX"), and olefin-block copolymers (such as those marketed by The Dow Chemical Company under the trademark "INFUSE"), and other polyolefin elastomers (such as the EPDM marketed by The Dow Chemical Company under the trademark "NORDEL" or "NORDEL IP").

The solvent will vary depending upon the manufactured polymer. Aprotic polar solvents such as water, propylene carbonate, ethylene carbonate, butyrolactone, acetonitrile, benzonitrile, nitromethane, nitrobenzene, sulfolane, dimethylformamide, N-methylpyrrolidone, or the like, or combinations thereof may be used to solvate some polymers. Polar protic solvents such as methanol, acetonitrile, nitromethane, ethanol, propanol, isopropanol, butanol, or the like, or combinations thereof may also be used. Other non-polar solvents such a benzene, toluene, methylene chloride, carbon tetrachloride, hexane, diethyl ether, tetrahydrofuran, or the like, or combinations thereof may be used to solvate some polymers. Co-solvents comprising at least one aprotic polar solvent and at least one non-polar solvent may also be utilized to modify the swelling power of the solvent and thereby adjust the solvating power of the solvent. An exemplary solvent for polyolefins is Isopar^{™} E from ExxonMobil.

The aforementioned polymers are manufactured in a solution or slurry polymerization reactor in which the monomers and produced polymers are entrained in a solvent or diluent. Other polymer solutions may also be manufactured (intentionally or unintentionally) containing large or small amounts of volatile components. Typical volatile components include solvents (such as aromatic or aliphatic inert diluents), unreacted monomers and/or comonomers and low molecular weight reaction by-products. The amount of solvent, unreacted monomers, unreacted comonomers, and/or other volatile components to be removed from the polymer solution may range from a large excess to a mere contaminating amount. Molten polymers produced in solution- or in slurry-polymerization plants, even after an initial flash-devolatilization stage, often contain from 10 to 60 weight percent or more of dissolved or entrained volatile components at the point they are processed in the heating apparatus. Typically, the amount of residual volatile components remaining in the devolatilized polymer should be less than about 0.5 wt%, preferably less than 0.1 wt%, and more preferably less than 0.05 wt%, based on the total weight of the devolatilized polymer as measured by ASTM D-4526.

Depending upon the starting concentration of volatile components in the flowable material to be devolatilized, and the level of residual volatiles that are acceptable in the devolatilized product, more than one stage (such as two or three stages) of devolatilization apparatus may be used. In addition, the devolatilization apparatus may be used in combination with other known devolatilization techniques, such as simple flash-devolatilization, ionic fluid extraction, extraction using a super-critical fluid, distillation, steam-stripping or carbon-dioxide-stripping, either in separate devolatilization stages or (in the case, for example, of steam-stripping or carbon-dioxide stripping) in combination with the apparatus of this invention within the same devolatilization stage.

The distributor detailed herein has a number of advantages. These include varying slot spacing or annulus size from inner pipe to create even flow distribution from top to bottom. The use of a first conduit and a second conduit permits the heating of polymer at startup. The second conduit functions as a retaining mechanism for the plate stack. The design permits a lower pressure drop across the distributor, since the polymeric solution will flash at the slots of the distributor creating a foam which creates surface area for mass transfer to take place. The design displays a high reliability because it has few weld connections thus reducing the chances for heating fluid leaks.

The tapered design of the plurality of plate stacks allows for lower interference of foam from higher levels with the foam from the lower levels. It does not degrade polymer in slots either because it does not create for stagnant polymer or foam at certain slots due to flow maldistribution. The distributor employs an alternating plate and spacer design. Internal rods may be used for alignment, positioning and retaining of the spacers.

The distributor detailed herein is described in the following non-limiting example.

### Example

This theoretical example demonstrates the functioning of the distributor. An example of a distributor for varying operating conditions is presented in Table 1. The polymer flow rate is 20 metric tons per hour (MT/hr). The distributor has 6,000 slots, 12 slots per layer. Each layer has the same length of 25 centimeters and a height of 2 millimeters. The polymer melt viscosity is 1,000,000 centipoise (cp). The polymer is an ethylene/octene copolymer. The solvent is Isopar^{®} E. The melt polymer density is typical for polyethylene. The solvent density is estimated for Isopar E^{®} as a function of temperature and pressure using the PC-SAFT equation of state and fitting the estimates to obtain an empirical correlation as a function of temperature and pressure. The foam density is estimated using the volume average mixing rule. The flow rate of the solution through the slots is estimated based on the total solution divided by the number of slots, and the corresponding velocity is the average velocity exiting the slots given the flow rate and estimated foam density.

**Table 1**

| **Temp (°C)** | **Press (bar)** | **% polymer into distributor** | **Volume Fraction Vapor** | **Dens vapor (kg/m³)** | **Dens polymer (kg/m³)** | **Dens foam (kg/m³)** | **Flow kg/hr/slot** | **Slot velocity - foam (m/s)** |
|---|---|---|---|---|---|---|---|---|
| 250 | 10 | 50 | 0.9566 | 33.365 | 736 | 63.84 | 6.7 | 0.04 |
| 200 | 10 | 75 | 0.8710 | 36.334 | 736 | 126.59 | 4.4 | 0.01 |
| 200 | 1 | 50 | 0.9960 | 2.978 | 736 | 5.93 | 6.7 | 0.44 |
| 200 | 1 | 60 | 0.9940 | 2.978 | 736 | 7.40 | 5.6 | 0.29 |
| 200 | 1 | 80 | 0.9841 | 2.978 | 736 | 14.65 | 4.2 | 0.11 |
| 200 | 1 | 90 | 0.9649 | 2.978 | 736 | 28.74 | 3.7 | 0.05 |
| 180 | 0.2 | 60 | 0.9988 | 0.608 | 736 | 1.52 | 5.6 | 1.42 |
| 180 | 0.2 | 70 | 0.9981 | 0.608 | 736 | 2.02 | 4.8 | 0.91 |
| 180 | 0.2 | 80 | 0.9967 | 0.608 | 736 | 3.03 | 4.2 | 0.53 |
| 220 | 0.03 | 85 | 0.9994 | 0.084 | 736 | 0.56 | 3.9 | 2.73 |
| 220 | 0.03 | 90 | 0.9990 | 0.084 | 736 | 0.84 | 3.7 | 1.72 |
| 220 | 0.03 | 95 | 0.9978 | 0.084 | 736 | 1.67 | 3.5 | 0.82 |
| 250 | 0.03 | 98 | 0.9947 | 0.079 | 736 | 3.95 | 3.4 | 0.33 |

### Definitions

By "substantially uniform," as used with respect to a dimension (such as width or height) or a cross-sectional area of zone within a heating channel, is meant that the same is either not converging nor diverging at all, or is converging and/or diverging by no more than ten percent of the average of that dimension.

"Polymer" refers to a compound prepared by polymerizing monomers, whether of the same or a different type of monomer. The generic term "polymer" embraces the terms "oligomer," "homopolymer," "copolymer," "terpolymer" as well as "interpolymer."

"Interpolymer" refers to polymers prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

"Oligomer" refers to a polymer molecule consisting of only a few monomer units, such as a dimer, trimer, or tetramer.

"Bubble point pressure" means the highest pressure at which the first bubble of vapor is formed at a given temperature.

"Polymer solution" means a solution containing a dissolved polymer where the polymer and the volatiles are in a single phase - a liquid phase.

"Heating fluid" means a fluid useful to convey heat from a heating source, and transfer that heat by indirect heat exchange to a plate of the heating apparatus. Suitable thermal-fluids include steam, hot oils, and other thermal-fluids, such as those marketed by The Dow Chemical Company under the trademark "DOWTHERM^{™}."

Solution viscosities are measured using an Anton Paar MCR 102 rheometer made by Anton Paar Germany GmbH. The rheometer is equipped with a C-ETD300 electrical heating system. The cup-and-bob system (combination of concentric cylinders) comprises a 27 millimeter (mm) diameter cup and a 25 mm diameter bob to allow for 1 mm gap between the two. The bob is operated in rotational mode inside a 150 bar (10.5 kg/cm²) pressure cell. Viscosity measurements are obtained at a pressure of 30 bar (obtained with a nitrogen pad), a range of temperatures (150 to 250°C), a range of polymer concentrations (20 to 90 weight percent), a range of shear rates (0.1 to >100 reciprocal seconds (s⁻¹)), and range of polymer molecular weights (15,000 to 200,000 g/mole). The solvent in all cases is Isopar^{™} E by ExxonMobil. The viscosity measurements obtained range from 800 to greater than 2,000,000 centipoise.

## Claims

1. A distributor (100) comprising:
a first conduit (102); where the first conduit (102) has a hot oil inlet port (101) for charging a hot oil (250) into the distributor (100);
a second conduit (104); where the first conduit (102) lies inside the second conduit (104) to define a first annular space (122) therebetween; where the second conduit (104) has an exit port (103) for removing the hot oil (250) from the distributor (100);
a plurality of plate stacks (112) disposed around the second conduit (104) to define a narrowing second annular space (124) from top to bottom of the distributor (100); wherein the second annular space (124) is in contact with an inlet port (111) that receives a polymer solution; where each successive plate stack (112) has smaller inner diameter and smaller outer diameter than the plate stack (112) located above it;
where each plate stack (112A, 112B, 112C) comprises a plurality of plates; where the plurality of plates further define a plurality of conduits, each conduit having a varying width over its length and extending radially outwards from the second annular space (124), where the plurality of conduits is in fluid communication with the second annular space (124); and where the distributor (100) is operated at a pressure and a temperature effective to promote separation of a solvent from a polymer solution during transport of the polymer solution through the distributor (100).

2. The distributor (100) of Claim 1, where the conduit in the plate stack (112) has an increasing cross-sectional area as a radial distance from a center of first conduit (102) increases.

3. The distributor (100) of Claim 1, where the conduit in the plate stack (112) has a decreasing cross-sectional area as a radial distance from a center of first conduit (102) increases.

4. The distributor (100) of Claim 3, where the conduit with the decreasing cross-sectional area is located further away from a polymer solution inlet port (111) than a conduit in the plate stack (112) with a cross-sectional area that increases with radial distance from the center of the first conduit (102).

5. The distributor (100) of Claim 1, where the conduit in the plate stack (112) has an increasing width over a portion of its length and has a decreasing width over a portion of its length; where the length is measured as the radial distance from a center of the first conduit (102).

6. The distributor (100) of Claim 1, where a temperature and pressure of the distributor (100) is effective to facilitate an onset of solvent flashing in the conduit.

7. The distributor (100) of Claim 6, where the temperature and pressure of the distributor (100) is effective to facilitate a remainder of solvent flashing outside the conduit after the polymer solution has been transported through the conduit.

8. The distributor (100) of Claim 1, where the plates intersect with tubes (240) that transport a hot oil (250) or with rods that facilitate maintaining an alignment of the plates.

9. The distributor (100) of Claim 1, where the plates in the stack are designed to have a cross sectional area optimized to ensure even distribution of the polymer solution through the distributor (100).

10. A devolatilizing chamber (600) comprising a first port (602) for removing a solvent and a second port (604) for removing a polymer; where the second port (604) is equipped with a positive displacement pump (606); and wherein the distributor as defined in any one of claims 1 to 9 is located atop the devolatilizing chamber (600)).

11. A method comprising:
charging into a distributor (100) a polymer solution; where the distributor (100) comprises:
a first conduit (102); where the first conduit (102) has a hot oil inlet port (101) for charging a hot oil (250) into the distributor (100);
a second conduit (104); where the first conduit (102) lies inside the second conduit (104) to define a first annular space (122) therebetween; where the second conduit (104) has an exit port (103) for removing the hot oil (250) from the distributor (100);
a plurality of plate stacks (112) disposed around the second conduit (104) to define a narrowing second annular space (124) from top to bottom of the distributor (100); where each successive plate stack (112) has smaller inner diameter than the plate stack (112) located above it;
wherein the second annular space (124) is in contact with an inlet port (111) that receives a polymer solution; where each successive plate stack (112) has smaller inner diameter and smaller outer diameter than the plate stack (112) located above it;
where each plate stack (112) comprises a plurality of plates; where the plurality of plates further define a plurality of conduits, each conduit having a varying width over its length and extending radially outwards from the second annular space (124), where the plurality of conduits is in fluid communication with the second annular space (124); and where the distributor (100) is operated at a pressure and a temperature effective to promote separation of a solvent from a polymer solution during transport of the polymer solution through the distributor (100);
removing the solvent from the distributor (100) via a first port (602); and
removing a polymer from the distributor (100) via a second port (604).

## Patentansprüche

1. Verteiler (100), umfassend:
eine erste Leitung (102); wobei die erste Leitung (102) einen Heißöleinlassanschluss (101) zum Füllen eines heißen Öls (250) in den Verteiler (100) aufweist;
eine zweite Leitung (104); wobei die erste Leitung (102) innerhalb der zweiten Leitung (104) liegt, um einen ersten ringförmigen Raum (122) dazwischen zu definieren; wobei die zweite Leitung (104) einen Austrittsanschluss (103) zum Entfernen des heißen Öls (250) aus dem Verteiler (100) aufweist;
eine Vielzahl von Plattenstapeln (112), die um die zweite Leitung (104) herum angeordnet sind, um einen sich von oben nach unten verengenden zweiten ringförmigen Raum (124) des Verteilers (100) zu definieren; wobei der zweite ringförmige Raum (124) mit einem Einlassanschluss (111) in Kontakt steht, der eine Polymerlösung aufnimmt; wobei jeder aufeinanderfolgende Plattenstapel (112) einen kleineren Innendurchmesser und einen kleineren Außendurchmesser als der sich darüber befindliche Plattenstapel (112) aufweist;
wobei jeder Plattenstapel (112A, 112B, 112C) eine Vielzahl von Platten umfasst; wobei die Vielzahl von Platten ferner eine Vielzahl von Leitungen definiert, wobei jede Leitung eine über ihre Länge variierende Breite aufweist und sich von dem zweiten ringförmigen Raum (124) radial nach außen erstreckt, wobei die Vielzahl von Leitungen in Fluidkommunikation mit dem zweiten ringförmigen Raum (124) steht; und wobei der Verteiler (100) bei einem Druck und einer Temperatur betrieben wird, die wirksam ist, um die Trennung eines Lösungsmittels von einer Polymerlösung während des Transports der Polymerlösung durch den Verteiler (100) zu fördern.

2. Verteiler (100) nach Anspruch 1, wobei die Leitung in dem Plattenstapel (112) eine zunehmende Querschnittsfläche aufweist, wenn ein radialer Abstand von einer Mitte der ersten Leitung (102) zunimmt.

3. Verteiler (100) nach Anspruch 1, wobei die Leitung in dem Plattenstapel (112) eine abnehmende Querschnittsfläche aufweist, wenn ein radialer Abstand von einer Mitte der ersten Leitung (102) zunimmt.

4. Verteiler (100) nach Anspruch 3, wobei sich die Leitung mit der abnehmenden Querschnittsfläche weiter von einem Polymerlösungseinlassanschluss (111) entfernt befindet als eine Leitung in dem Plattenstapel (112) mit einer Querschnittsfläche, die mit dem radialen Abstand von der Mitte der ersten Leitung (102) zunimmt.

5. Verteiler (100) nach Anspruch 1, wobei die Leitung im Plattenstapel (112) über einen Abschnitt ihrer Länge eine zunehmende Breite aufweist und über einen Abschnitt ihrer Länge eine abnehmende Breite aufweist; wobei die Länge als der radiale Abstand von einer Mitte der ersten Leitung (102) gemessen wird.

6. Verteiler (100) nach Anspruch 1, wobei eine Temperatur und ein Druck des Verteilers (100) wirksam sind, um ein Einsetzen eines Lösungsmittels, das in der Leitung abdunstet, zu ermöglichen.

7. Verteiler (100) nach Anspruch 6, wobei die Temperatur und der Druck des Verteilers (100) wirksam sind, um es einem Rest des Lösungsmittels zu ermöglichen, außerhalb der Leitung abzudunsten, nachdem die Polymerlösung durch die Leitung transportiert wurde.

8. Verteiler (100) nach Anspruch 1, wobei sich die Platten mit Rohren (240), die ein heißes Öl (250) transportieren, oder mit Stäben, die das Aufrechterhalten einer Ausrichtung der Platten ermöglichen, schneiden.

9. Verteiler (100) nach Anspruch 1, wobei die Platten in dem Stapel so ausgebildet sind, dass sie eine Querschnittsfläche aufweisen, die optimiert ist, um eine gleichmäßige Verteilung der Polymerlösung durch den Verteiler (100) sicherzustellen.

10. Entgasungskammer (600), umfassend einen ersten Anschluss (602) zum Entfernen eines Lösungsmittels und einen zweiten Anschluss (604) zum Entfernen eines Polymers; wobei der zweite Anschluss (604) mit einer Verdrängerpumpe (606) ausgestattet ist; und wobei sich der nach einem der Ansprüche 1 bis 9 definierte Verteiler über der Entgasungskammer (600) befindet.

11. Verfahren, umfassend:
Füllen einer Polymerlösung in einen Verteiler (100); wobei der Verteiler (100) umfasst:
eine erste Leitung (102); wobei die erste Leitung (102) einen Heißöleinlassanschluss (101) zum Füllen eines heißen Öls (250) in den Verteiler (100) aufweist;
eine zweite Leitung (104); wobei die erste Leitung (102) innerhalb der zweiten Leitung (104) liegt, um einen ersten ringförmigen Raum (122) dazwischen zu definieren; wobei die zweite Leitung (104) einen Austrittsanschluss (103) zum Entfernen des heißen Öls (250) aus dem Verteiler (100) aufweist;
eine Vielzahl von Plattenstapeln (112), die um die zweite Leitung (104) herum angeordnet sind, um einen sich von oben nach unten verengenden zweiten ringförmigen Raum (124) des Verteilers (100) zu definieren; wobei jeder aufeinanderfolgende Plattenstapel (112) einen kleineren Innendurchmesser als der sich darüber befindliche Plattenstapel (112) aufweist;
wobei der zweite ringförmige Raum (124) mit einem Einlassanschluss (111) in Kontakt steht, der eine Polymerlösung aufnimmt; wobei jeder aufeinanderfolgende Plattenstapel (112) einen kleineren Innendurchmesser und einen kleineren Außendurchmesser als der sich darüber befindliche Plattenstapel (112) aufweist;
wobei jeder Plattenstapel (112) eine Vielzahl von Platten umfasst; wobei die Vielzahl von Platten ferner eine Vielzahl von Leitungen definiert, wobei jede Leitung eine über ihre Länge variierende Breite aufweist und sich von dem zweiten ringförmigen Raum (124) radial nach außen erstreckt, wobei die Vielzahl von Leitungen in Fluidkommunikation mit dem zweiten ringförmigen Raum (124) steht; und
wobei der Verteiler (100) bei einem Druck und einer Temperatur betrieben wird, die wirksam ist, um die Trennung eines Lösungsmittels von einer Polymerlösung während des Transports der Polymerlösung durch den Verteiler (100) zu fördern;
Entfernen des Lösungsmittels aus dem Verteiler (100) über einen ersten Anschluss (602); und
Entfernen eines Polymers aus dem Verteiler (100) über einen zweiten Anschluss (604).

## Revendications

1. Distributeur (100) comprenant :
un premier conduit (102) ; où le premier conduit (102) a un orifice d'entrée d'huile chaude (101) pour charger une huile chaude (250) dans le distributeur (100) ;
un deuxième conduit (104) ; où le premier conduit (102) s'étend à l'intérieur du deuxième conduit (104) pour définir un premier espace annulaire (122) entre eux ; où le deuxième conduit (104) a un orifice de sortie (103) pour retirer l'huile chaude (250) du distributeur (100) ;
une pluralité d'empilements de plaques (112) disposés autour du deuxième conduit (104) pour définir un deuxième espace annulaire se rétrécissant (124) allant de haut en bas du distributeur (100) ; dans lequel le deuxième espace annulaire (124) est en contact avec un orifice d'entrée (111) qui reçoit une solution de polymère ; où chaque empilement successif de plaques (112) a un plus petit diamètre interne et un plus petit diamètre externe que l'empilement de plaques (112) situé au-dessus de celui-ci ;
où chaque empilement de plaques (112A, 112B, 112C) comprend une pluralité de plaques ; où la pluralité de plaques définissent en outre une pluralité de conduits, chaque conduit ayant une largeur variable sur sa longueur et s'étendant radialement vers l'extérieur à partir du deuxième espace annulaire (124), où la pluralité de conduits est en communication fluidique avec le deuxième espace annulaire (124) ; et où le distributeur (100) est mis en fonctionnement à une pression et à une température efficaces pour promouvoir une séparation d'un solvant par rapport à une solution de polymère pendant un transport de la solution de polymère à travers le distributeur (100).

2. Distributeur (100) selon la revendication 1, où le conduit dans l'empilement de plaques (112) a une aire en coupe transversale qui augmente à mesure qu'une distance radiale à partir d'un centre du premier conduit (102) augmente.

3. Distributeur (100) selon la revendication 1, où le conduit dans l'empilement de plaques (112) a une aire en coupe transversale qui diminue à mesure qu'une distance radiale à partir d'un centre du premier conduit (102) augmente.

4. Distributeur (100) selon la revendication 3, où le conduit avec l'aire en coupe transversale qui diminue se situe plus loin d'un orifice d'entrée de solution de polymère (111) qu'un conduit dans l'empilement de plaques (112) avec une aire en coupe transversale qui augmente avec la distance radiale par rapport au centre du premier conduit (102).

5. Distributeur (100) selon la revendication 1, où le conduit dans l'empilement de plaques (112) a une largeur qui augmente sur une partie de sa longueur et a une largeur qui diminue sur une partie de sa longueur ; où la longueur est mesurée en tant que distance radiale à partir d'un centre du premier conduit (102).

6. Distributeur (100) selon la revendication 1, où une température et une pression du distributeur (100) sont efficaces pour faciliter un début de vaporisation instantanée de solvant dans le conduit.

7. Distributeur (100) selon la revendication 6, où la température et la pression du distributeur (100) sont efficaces pour faciliter une vaporisation instantanée d'un reste de solvant à l'extérieur du conduit après que la solution de polymère a été transportée à travers le conduit.

8. Distributeur (100) selon la revendication 1, où les plaques croisent des tubes (240) qui transportent une huile chaude (250) ou des tiges qui facilitent le maintien d'un alignement des plaques.

9. Distributeur (100) selon la revendication 1, où les plaques dans l'empilement sont conçues pour avoir une aire en coupe transversale optimisée pour garantir une répartition uniforme de la solution de polymère à travers le distributeur (100).

10. Chambre de dévolatilisation (600) comprenant un premier orifice (602) pour retirer un solvant et un deuxième orifice (604) pour retirer un polymère ; où le deuxième orifice (604) est équipé d'une pompe à déplacement positif (606) ; et dans laquelle le distributeur tel que défini dans l'une quelconque des revendications 1 à 9 se situe au-dessus de la chambre de dévolatilisation (600)).

11. Procédé comprenant :
le chargement dans un distributeur (100) d'une solution de polymère ; où le distributeur (100) comprend :
un premier conduit (102) ; où le premier conduit (102) a un orifice d'entrée d'huile chaude (101) pour charger une huile chaude (250) dans le distributeur (100) ;
un deuxième conduit (104) ; où le premier conduit (102) s'étend à l'intérieur du deuxième conduit (104) pour définir un premier espace annulaire (122) entre eux ; où le deuxième conduit (104) a un orifice de sortie (103) pour retirer l'huile chaude (250) du distributeur (100) ;
une pluralité d'empilements de plaques (112) disposés autour du deuxième conduit (104) pour définir un deuxième espace annulaire se rétrécissant (124) allant de haut en bas du distributeur (100) ; où chaque empilement successif de plaques (112) a un diamètre interne plus petit que l'empilement de plaques (112) situé au-dessus de lui ;
dans lequel le deuxième espace annulaire (124) est en contact avec un orifice d'entrée (111) qui reçoit une solution de polymère ; où chaque empilement successif de plaques (112) a un plus petit diamètre interne et un plus petit diamètre externe que l'empilement de plaques (112) situé au-dessus de celui-ci ;
où chaque empilement de plaques (112) comprend une pluralité de plaques ; où la pluralité de plaques définissent en outre une pluralité de conduits, chaque conduit ayant une largeur variable sur sa longueur et s'étendant radialement vers l'extérieur à partir du deuxième espace annulaire (124), où la pluralité de conduits est en communication fluidique avec le deuxième espace annulaire (124) ; et
où le distributeur (100) est mis en fonctionnement à une pression et à une température efficaces pour promouvoir une séparation d'un solvant par rapport à une solution de polymère pendant un transport de la solution de polymère à travers le distributeur (100) ;
le retrait du solvant du distributeur (100) par l'intermédiaire d'un premier orifice (602) ; et
le retrait d'un polymère du distributeur (100) par l'intermédiaire d'un deuxième orifice (604).
